# EUROPEAN PATENT SPECIFICATION

(11) **EP 2 886 621 B1**
(45) Date of publication and mention of the grant of the patent: **25.05.2016**
(21) Application number: 13382529.9
(22) Date of filing: 19.12.2013
(51) Int. Cl.: C09J 103/02

(54) **Adhesive for the manufacture of laminates of cellulose products and manufacturing procedures of laminates of cellulose products**
Klebstoff zur Herstellung von Laminaten von Zelluloseprodukten und Herstellungsverfahren von Laminaten und Zelluloseprodukten
Adhésive pour la préparation des produits de cellulose et procédés de préparation des stratifiés et des produits de cellulose

(43) Date of publication of application: 24.06.2015
(73) Proprietor: Grupo Antolin-Ingenieria, S.A., 09007 Burgos (ES)
(72) Inventor: Merino Sanchez, Cesar, 09007 BURGOS (ES); Merino Amayuelas, María del Pilar, 09007 BURGOS (ES)
(74) Representative: Capitán García, Maria Nuria

(56) References cited:
- EP-A1- 1 101 809
- EP-A1- 1 352 939
- US-A1- 2013 052 379
- M. GOPIRAMAN, K. FUJIMORI, K. ZEESHAN, B. S. KIM, I. S. KIM: "Structural and mechanical properties of celluloseacetate/graphene hybrid nanofibers: Spectroscopic investigations", EXPRESS POLYMER LETTERS, vol. 7, no. 6, June 2013 (2013-06), pages 554-563, XP002720545,
- CLARAMARÍA RODRÍGUEZ-GONZÁLEZ ET AL: "Polysaccharide Nanocomposites Reinforced with Graphene Oxide and Keratin-Grafted Graphene Oxide", INDUSTRIAL & ENGINEERING CHEMISTRY RESEARCH, vol. 51, no. 9, 7 March 2012 (2012-03-07), pages 3619-3629, XP055103116, ISSN: 0888-5885, DOI: 10.1021/ie200742x

## Description

### TECHNICAL FIELD OF INVENTION

This invention relates to an adhesive for the manufacture of laminates of cellulose products, such as paper or cardboard laminates.

In addition, the invention relates to a manufacturing procedure of this laminate of cellulose products by the use of said adhesive.

### BACKGROUND OF THE INVENTION

The adhesives most commonly used in the manufacture of laminates of cellulose products are aqueous adhesives where the main ingredient is starch.

This type of aqueous adhesives of starch base are particularly adequate for use in cellulose products due to the good compatibility between cellulose and starch.

Starch provides the active ingredients providing this type of adhesives, amongst others, with the properties of adherence with cellulose.

Starch is supplied as granules formed mainly by two compounds of different structure, amylose and amylopectin.

In the presence of water under given temperature conditions, a jellification process occurs whereby starch granules absorb water causing swelling thereof until rupture of its structure occurs, releasing amylose and amylopectin molecules. As a result of this effect, starch acquires adhesive properties.

In addition, this type of adhesives usually comprise a percentage of soda with the function of reducing jellification temperature of starch for the purpose of reducing the cycle times of the manufacturing procedure of the laminate of cellulose products.

On the other hand, said adhesives can comprise a percentage of borax with the function of acting on the viscosity of the adhesive for the purpose of controlling penetration thereof in the cellulose fibres that form the cellulose foils of the laminate, thus enhancing distribution.

An adhesive will be adequate if it allows for reaching good adhesion properties among the different layers forming the laminate of cellulose products.

For this, it is necessary to control both the specific composition of each adhesive dependent on the cellulose materials used, such as the conditions of the manufacturing process of the adhesive and those of its application process on the laminate of cellulose products, in particular temperature of the process, viscosity and the jellifying point of the adhesive.

For the purpose of improving the adhesive properties of the adhesives used for binding the cellulose materials, for instance solutions based on the control of the adhesive composition are known, as described for instance in patents EP1352939, EP1101809 and EP0276894, or solutions based on the control of the process conditions, as described for instance in patents ES8201198 and EP0229741.

For this invention, improving the composition of this type of adhesives has been considered by using additives which allow for acting directly on the adhesion properties of the adhesive, which results in an improvement of the mechanical properties of the laminate of cellulose products using this adhesive and the products obtained from it.

### DESCRIPTION OF THE INVENTION

This invention, therefore, relates to an adhesive for the manufacture of laminates of cellulose products comprising a mixture of water and starch characterised in that the mixture also comprises graphene nanofilaments with a diameter ranging from 1 to 100 nm and with a length greater than 30 µm, and where the percentage of the weight of graphene nanofilaments ranges from 0.000001 to 0.0001% from the total weight of the mixture, and the percentage of weight in starch comprises from 20 to 38% from the total weight of the mixture.

The graphene nanofilaments of the invention relate to nanometric structures with a ratio of appearance higher than 300. Examples of this type of structures can be nanotubes of monolayer or multilayer carbon, or carbon nanofibres with a structure that can be of several types, such as stacked plates, stacked cone type, or continuous spiral tape type.

The addition of a small amount of graphene nanofilaments to the mixture formed by the adhesive allows for improving exceptionally the adhesion properties thereof, as well as the manufacturing process of laminates of cellulose products comprising this adhesive.

On the other hand, this invention relates to a manufacturing procedure of laminates of cellulose products comprising the manufacture and application of the adhesive of the invention with the aforementioned characteristics.

The improvement of the adhesive properties of the adhesive used for the manufacture of the laminate of cellulose products involves an improvement in the adherence between the layers forming the laminate of cellulose products, and consequently the improvement of the mechanical properties of the laminate of cellulose products and the products obtained from it.

### DESCRIPTION OF THE FIGURES

This specification is supplemented with a set of figures illustrating the preferential example and never limiting the invention.

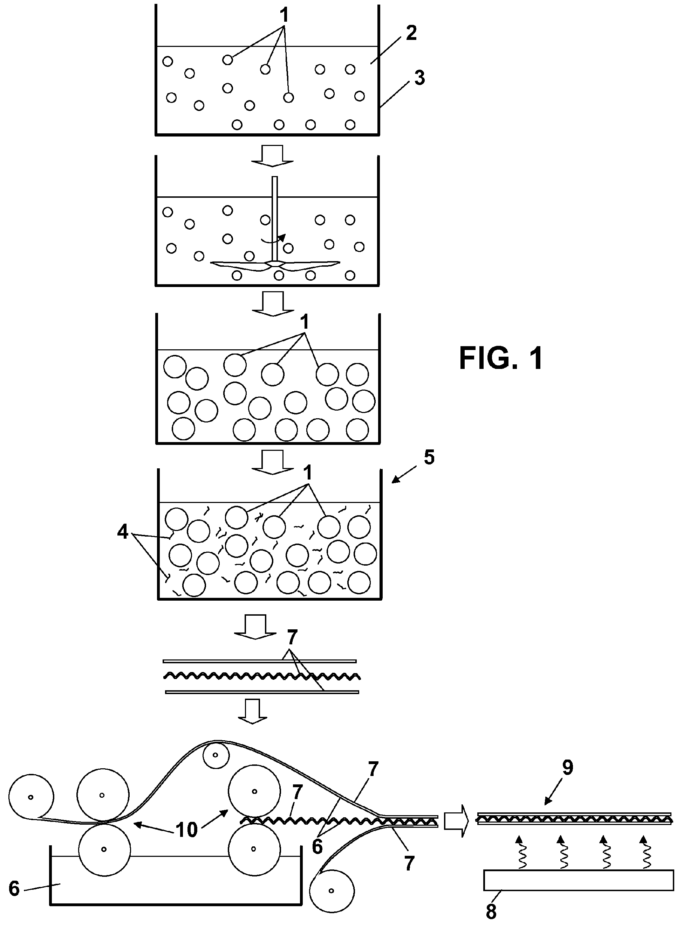

Figure 1 represents a schematic view of the manufacturing process of a laminate of cellulose products by the use of the adhesive of the invention.

### DETAILED DESCRIPTION OF THE INVENTION

The adhesive (6) of the invention comprises a mixture (5) of water (2), starch (1) and graphene nanofilaments (4).

The percentage in weight of starch (1) ranges from 20 to 38% from the total weight of the mixture (5).

Starch (1) is supplied as granules and can be obtained for instance from cereal seeds, such as wheat, corn or rice, or from tubers and roots such as potato, sweet potato or yucca.

In addition, these starches can be subject to modification processes by chemical and/or physical treatments to cover the deficits that can be shown by native starches depending on the needs of application of the adhesive.

On the other hand, the starch (1) that is part of the mixture (5) that forms the adhesive (6) can comprise a combination of starch and modified starch.

Another ingredient that forms the mixture forming the adhesive (6) are graphene nanofilaments (4).

The percentage in weight of graphene nanofilaments (4) ranges from 0.000001 to 0.0001% from the total weight of the mixture (5).

The graphene nanofilaments (4) of the invention show a diameter ranging from 1 to 100 nm and a length above 30 µm.

In particular, the graphene nanofilaments (4) of the invention can show a ratio of appearance above 300.

Some examples of this type of structures can be monolayer or multilayer carbon nanotubes or carbon nanofibres with a structure that can of several types, for instance stacked plate type, stacked cone type, or continuous stacked tape type.

In addition, the mixture (5) that forms the adhesive (6) can comprise other additives for the purpose of improving the conditions of the manufacturing process of this laminate (9) of cellulose products and/or for the purpose of improving the properties of the laminate (9) of cellulose products.

Examples of additives that improve the conditions of the manufacturing process of the laminate (9) of cellulose products are soda at a percentage in weight under 5% of the total weight of the mixture (5), where the main function is to reduce the jellification temperature of the starch (1) for the purpose of reducing the cycle times of the manufacturing procedure of the laminate of cellulose products, or borax at a percentage in weight under 2% of the total weight of the mixture (5), with the main function of allow to act on the viscosity of the adhesive (6) for the purpose of controlling penetration thereof in the cellulose fibres forming the cellulose foils (7) of the laminate (9), thus enhancing distribution.

Examples of additives improving the properties of the laminate (9) of cellulose products are bleaching, degassing, fungicidal agents, etc.

On the other hand, the invention relates to a manufacturing procedure of a laminate (9) of cellulose products by application of the adhesive (6) described above according to the scheme represented in Figure 1.

The procedure of the invention starts with the manufacture of an adhesive (6) by mixing water (2), starch (1), and graphene nanofilaments (4), where the percentage in weight of starch (1) ranges from 20 to 38% from the total weight of the mixture (5), and the percentage in weight of the graphene nanofilaments (4) ranges from 0.000001 to 0.0001% from the total weight of the mixture (5).

The temperature of water (2) when adding at least one part of starch (1) is preferably within the range of 25 to 35°C for the purpose of enhancing water absorption (2) in the starch granules (1), causing swelling thereof.

The addition of graphene nanofilaments (4) to the mixture (5) for obtaining the final composition of the adhesive (6) can be performed at different times of the manufacturing procedure of the adhesive (6), following the same procedure as when adding other additives, such as soda or borax in case these are part of the mixture (5) forming the adhesive (6).

With regard to the process of mixing starch (1) and water (2), this can be performed in a single step, or following the most common method of manufacturing this type of adhesives, in two steps.

The two-step process comprises mixing water (2) at a temperature ranging from 25 to 30°C and starch (1) in a container (3), and subsequent stirring of said mixture to enhance water absorption (2) in the starch granules (1), causing swelling thereof until the starch granules (1) are jellified.

Then add more starch (1) and more water (2) to complete the total percentage of each component.

The starch (1) added in this second step jellifies during the manufacturing process of the laminates (9) of cellulose products and in particular during the process of application of the adhesive (6); therefore, it causes the properties of the adhesive (6).

Optionally, other additives can be added, such as soda, borax, bleaching agents, degassers, fungicides, etc.

With regard to the addition of graphene nanofilaments (4), this can be performed at different times of the manufacturing procedure of the adhesive (6).

For the purpose of enhancing a consistent distribution of the graphene nanofilaments (4) in the adhesive (6), these can be pre-dispersed in water (2) before performing addition to the mixture (5) that will form the adhesive (6).

This pre-dispersion can be performed by stirring a mixture of water and graphene nanofilaments (4).

As described above, the graphene nanofilaments (4) of the invention show a diameter ranging from 1 to 100 nm and a length above 30 µm.

Once manufacture of the adhesive is ended (6), it is ready for use in the manufacture of the laminate (9) of cellulose products.

For manufacturing the laminate (9) of cellulose products first at least two cellulose foils (7) are arranged, and in the particular case represented in Figure 1 three foils (7), such as paper, cardboard, etc.

The cellulose foils (7) can show a flat, undulated configuration or a combination thereof, for the specific case represented in Figure 1.

Then an amount of adhesive (6) is then applied over at least a part of the surface of at least one of the cellulose foils (7), and in the particular case represented in Figure 1, over a surface of one of the cellulose foils (7) represented and over one surface of another of the cellulose foils (7) represented.

The application of adhesive can be performed by using a gluing device for rollers (10).

Prior to application of the adhesive (6) on the cellulose foils (7) an increase occurs in the temperature of the adhesive (6), which enhances the jellification process of starch granules (1) and the subsequent adhesion between cellulose foils (7) that forms the laminate (9) of cellulose products.

During this stage, the temperature of the adhesive (6) is preferably below 60°C.

The amount of adhesive (6) to be used in the manufacturing procedure of the laminate (9) of cellulose products will depend on the characteristics of the cellulose foils (7), the properties of the laminate (9) of cellulose products to be obtained, and the parameters of the manufacturing procedure of this laminate (9). The addition of graphene nanofilaments (4) allows for optimising the amount of adhesive (6) used.

Once the adhesive has been applied (6), the cellulose foils (7) are led to contact facing the cellulose foil surface (7) or the foils (7) comprised in the adhesive (6) to the foil (7) or foils (7), as shown in Figure 1, that shall be part of the laminate (9) of cellulose products to be obtained.

Finally, the cellulose foils in contact (7) are heated by heat application means (8), for obtaining the final joining between the cellulose foils (7).

This heating is such that it causes evaporation of the water (2) that is part of the adhesive (6) and solidification thereof, until the time when the final joining is created between the cellulose foils (7) that form the laminate (9) of cellulose products.

The presence of graphene nanofilaments (4) in the adhesive (6) reinforces the joining between the cellulose fibres of the cellulose foils (7), by its inclusion in the structure that forms the starch (1) once jellified.

As a result of this, an improvement occurs in the adherence of the sheets (7), and as a result the improvement of the mechanical properties of the laminate (9) of the cellulose products and the products obtained from it.

## Claims

1. *Adhesive for the manufacture of laminates of cellulose products comprising a mixture (5) of water (2) and starch (1) **characterised in that** the mixture (5) also comprises graphene nanofilaments (4) with a diameter ranging from 1 to 100 nm and with a length greater than 30 µm, and where the percentage of the weight of graphene nanofilaments (4) ranges from 0.000001 to 0.0001% from the total weight of the mixture (5), and the percentage of weight in starch comprises from 20 to* 38% *from the total weight of the mixture (5).*

2. *Adhesive for manufacturing laminates of cellulose products according to claim 1 from graphene nanofilaments (4) are selected from the groups of monolayer or multilayer carbon nanotubes, carbon nanofibres of stacked plate type, carbon nanofibres of stacked cone type and carbon nanofibres of continuous spiral tape type.*

3. *Adhesive for the manufacture of laminates of cellulose products according to claim 1 where the graphene nanofilaments (4) have a ratio of appearance above 300.*

4. *Adhesive for the manufacture of laminates of cellulose products according to claim 1 where mixture (5) comprises soda in a percentage in weight under 5% of the total weight of the mixture (5) and borax in a percentage in weight under 2% of the total weight of the mixture (5).*

5. *Procedure for manufacturing a laminate of cellulose products comprising the following steps:*
- *arrangement of at least two cellulose foils (7),*
- *obtaining an adhesive (6) by mixing water (2), starch (1) and graphene nanofilaments, where the percentage in weight of starch ranges from 20 to 38% from the total weight of the mixture (5), and the percentage in weight of the graphene nanofilaments (4) ranges from 0.000001 to 0.0001 % from the total weight of the mixture (5), and where said graphene monofilaments have a diameter ranging from 1 to 100 nm and a length greater than 30 µm,*
- *application of an amount of adhesive (6) obtained from the mixture (5) obtained in the previous stage over at least a part of the surface of at least a cellulose foil (7),*
- *arrangement in contact with two cellulose foils(7) facing the cellulose foil surface (7) that comprises the adhesive (6) with another cellulose foil (7),*
- *heating of the cellulose foils (7) in contact for obtaining the final joining between the cellulose foils (7) and obtaining the laminate (10) of cellulose products.*

6. *Procedure for manufacturing a laminate of cellulose products according to claim 5 where the graphene nanofilaments (4) are pre-dispersed in water before addition to the mixture (5) that forms the adhesive (6).*

## Patentansprüche

1. *Kleber zur Herstellung Laminate aus Zelluloseprodukten bestehen aus einem Gemisch (5) aus* Wasser *(2) und Stärke (1), die **dadurch gekennzeichnet sind, dass** das Gemisch (5) ebenfalls Nanofasern aus Graphen (4) mit einem Durchmesser von 1 bis 100 nm und einer Länge von mehr als 30 µm aufweist. Der Prozentsatz des Gewichts der Nanofasern aus Graphen (4) beträgt darin 0,000001 bis 0,0001% des Gesamtgewichts des Gemisches (5) und der Prozentsatz des Gewichts der Stärke reicht von 20 bis* 38% *des Gesamtgewichts des Gemisches (5).*

2. *Kleber zur Herstellung Laminate aus Zelluloseprodukten, entsprechend Anforderung 1, bei denen die Nanofasern aus Graphen (4) aus der Gruppe der ein- oder mehrlagigen Kohlenstoffnanoröhren, aus Kohlenstoffnanofasern in Form gestapelter Platten, kegelförmig und des kontinuierlichen Spiralbandtyps ausgewählt werden.*

3. *Kleber zur Herstellung Laminate aus Zelluloseprodukten, entsprechend Anforderung 1, bei der die Nanofasern aus Graphen (4) in einem Verhältnis von mehr als 300 in Erscheinung treten.*

4. *Kleber zur Herstellung Laminate aus Zelluloseprodukten, entsprechend Anforderung 1, bei denen das Gemisch (5) unter 5% Soda und unter 2% Borax des Gesamtgewichts des Gemisches (5) beinhaltet.*

5. *Ein Verfahren zur Herstellung eines Laminats aus Zelluloseprodukten umfasst die folgenden Schritte:*
- *Anordnen von mindestens zwei Zellulosefolien (7),*
- *Erhalten einen Klebstoff (6) durch Mischen von Wasser (2), Stärke (1) und Nanofasern aus Graphen, in dem sich das Gewicht der Stärke in einem Bereich von 20 bis* 38% *des Gesamtgewichtes des Gemisches (5) und das Gewichts der Nanofasern aus Graphen (4) sich von 0,000001 bis 0,0001% des Gesamtgewichtes des Gemisches bewegen. Die genannten Nanofasern aus Graphen besitzen einen Durchmesser von 1 bis 100 nm und eine Länge von mehr als 30 µm,*
- *Aufbringen eine Klebstoffmenge (6) des in der vorangegangenen Stufe gewonnenen Gemisches (5) über mindestens einen Teil der Oberfläche mindestens einer Zellulosefolie (7),*
- *Anordnen von zwei Zellulosefolien (7), wobei die Oberfläche der Zellulosefolie (7), die den Klebstoff enthält (6) einer anderen Zellulosefolie (7) zugewandt ist, um diese zu verbinden*
- *Erhitzen die sich berührenden Zellulosefolien (7), um die endgültige Verbindung zwischen den Zellulosefolien (7) und das Laminat (10) aus Zelluloseprodukten zu erhalten.*

6. *Ein Verfahren zur Herstellung eines Laminats aus Zelluloseprodukten, entsprechend Anforderung 5, bei dem die Nanofasern aus Graphen (4) vor Zugabe zum Gemisch (5), das den Klebstoff bildet (6), in Wasser aufgelöst werden.*

## Revendications

1. *Adhésif pour la fabrication de stratifiés de produits de cellulose comprenant un mélange (5) d'eau (2) et d'amidon (1), **caractérisé en ce que** le mélange (5) comprend également des nanofilaments de graphène (4) avec un diamètre dans la plage de 1 à 100 nm et une longueur supérieure à 30 µm et où le pourcentage du poids des nanofilaments de graphène (4) est compris dans une plage de 0,000001 à 0,0001* % *du poids total du mélange (5) et le pourcentage en poids dans l'amidon est composé de 20 à 38* % *du poids total du mélange (5).*

2. *Adhésif pour la fabrication de stratifiés de produits de cellulose selon la revendication 1, à partir de nanofilaments de graphène (4) qui sont choisis dans les groupes de nanotubes de carbone* à *couche unique ou couches multiples, nanofibres de carbone du type à plaques empilées, nanofibres de carbone du type à cônes empilés et nanofibres de carbone du type à bande en spirale continue.*

3. *Adhésif pour la fabrication de stratifiés de produits de cellulose selon la revendication 1 dans lequel les nanofilaments de graphène (4) ont un rapport d'aspect supérieur à 300.*

4. *Adhésif pour la fabrication de stratifiés de produits de cellulose selon la revendication 1 dans lequel le mélange (5) comprend de la soude en un pourcentage en poids inférieur à 5 % du poids total du mélange (5) et du borax en un pourcentage en poids inférieur à 2 % du poids total du mélange (5).*

5. *Procédure de fabrication d'un stratifié de produits de cellulose comprenant les étapes suivantes :*
- *agencement d'au moins deux feuilles de cellulose (7),*
- *obtention d'un adhésif (6) par mélange d'eau (2), d'amidon (1) et de nanofilaments de graphène, le pourcentage en poids de l'amidon étant compris entre 20 et 38 % du poids total du mélange (5) et le pourcentage en poids des nanofilaments de graphène (4) étant compris entre 0,000001 et 0,0001* % *du poids total du mélange* (5) *et lesdits monofilaments de graphène ayant un diamètre compris entre 1 et 100 nm et une longueur supérieure à 30 µm,*
- *application d'une quantité d'adhésif (6) obtenu à partir du mélange (5) obtenu dans l'étape précédente sur au moins une partie de la surface d'au moins une feuille de cellulose (7),*
- *agencement en contact de deux feuilles de cellulose (7) en amenant la surface de feuille de cellulose (7) qui comprend l'adhésif (6) à faire face à une autre feuille de cellulose (7),*
- *chauffage des feuilles de cellulose (7) en contact pour obtenir la jonction finale entre les feuilles de cellulose* (7) *et obtenir le stratifié (10) de produits de cellulose.*

6. *Procédure de fabrication d'un stratifié de produits de cellulose selon la revendication 5 dans lequel les nanofilaments de graphène (4) sont pré-dispersés dans l'eau avant l'ajout du mélange (5) qui forme l'adhésif (6).*
